# EUROPEAN PATENT APPLICATION

(11) **EP 4 796 304 A1**
(43) Date of publication of application: **26.08.2026**
(21) Application number: 26159487.3
(22) Date of filing: 19.02.2026
(51) Int. Cl.: B29C 70/48, B29C 70/54, B32B 37/00

(54) **RESIN INFUSION TOOL AND METHODS OF INFUSING RESIN**

(30) Priority: 19.02.2025 US 202519057543
(71) Applicant: The Boeing Company, Arlington, VA 22202 (US)
(72) Inventor: SERENCSITS, William Louis, Hollywood, SC (US); SCARFE, Manning James, Ascot Vale (AU); FRY, Jessica Offutt, Charleston, SC (US)
(74) Representative: Plasseraud IP

(57) **Abstract**

A resin infusion tool and methods of resin infusion are presented. A resin infusion tool comprises a first tool portion of the resin infusion tool comprising a rigid material with a part infusion region and resin wells formed in the rigid material adjacent the part infusion region, and a second tool portion of the resin infusion tool comprising a rigid material and configured to seal to the first tool portion to form a part infusion chamber comprising the part infusion region.

## Description

### FIELD

The present disclosure relates generally to composite manufacturing and more specifically to resin infusion.

### BACKGROUND

Aerospace resins have short shelf lives at ambient temperature. Cured part standards for aerospace qualification are very strict.

Aerospace resin mixing is precise and subject to in-process monitoring. Currently, resin infusion for aerospace is injection resin infusion. Conventional resin injections for aerospace are continual injections.

Commercial resin systems for other industries can tolerate mixing of old and new resin stocks without quality concerns. Mixing of old and new resin is not a feasible solution for aerospace resins and applications. Qualification standards for aerospace composites cannot tolerate unknown concentrations of aged resin.

Therefore, it would be desirable to have a method and apparatus that takes into account at least some of the issues discussed above, as well as other possible issues. For example, it would be desirable to have a method and apparatus that takes into account difficulties and complexities with infusing aerospace structures.

### SUMMARY

An embodiment of the present disclosure provides a resin infusion tool according to claim 1.

Another embodiment of the present disclosure provides a method of infusing resin into a composite preform according to claim 11.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of an exploded view of a resin infusion tool in accordance with an illustrative embodiment;
**Figure 4** is an illustration of a bottom exploded view of a resin infusion tool in accordance with an illustrative embodiment;
**Figure 5** is an illustration of a top view of a first tool portion in accordance with an illustrative embodiment;
**Figure 6** is an illustration of an isometric view of a piece of a first tool portion in accordance with an illustrative embodiment;
**Figure 7** is an illustration of a bottom view of a second tool portion in accordance with an illustrative embodiment;
**Figure 8** is an illustration of an isometric view of a cross-section of a second tool portion in accordance with an illustrative embodiment;
**Figure 9** is an illustration of a cross-sectional view of a resin infusion tool in accordance with an illustrative embodiment;
**Figure 10** is an illustration of a cross-sectional view of a section of the resin infusion tool in accordance with an illustrative embodiment;
**Figure 11** is an illustration of a cross-sectional view of a section of the resin infusion tool during infusion in accordance with an illustrative embodiment;
**Figure 12** is an illustration of a cross-sectional view of a section of the resin infusion tool during infusion in accordance with an illustrative embodiment;
**Figure 13** is a flowchart of a method of infusing resin into a composite preform in accordance with an illustrative embodiment;
**Figure 14** is an illustration of an aircraft manufacturing and service method in a form of a block diagram in accordance with an illustrative embodiment; and
**Figure 15** is an illustration of an aircraft in a form of a block diagram in which an illustrative embodiment may be implemented.

### DETAILED DESCRIPTION

The illustrative examples recognize and take into account several considerations. The illustrative examples recognize and take into account that Resin Transfer Molding (RTM) processes for infusing dry fiber structures are often designed for high rate applications.

The illustrative examples recognize and take into account that for composite manufacturing for non-aerospace applications, a high rate in this capacity means constant. The illustrative examples recognize and take into account that part infusions and cures in minutes, such as tens, hundreds, or more small or medium sized parts a day.

The illustrative examples recognize and take into account that aerospace primary structure parts are very large. The illustrative examples recognize and take into account that large aerospace structures are made at a rate of at most four to six parts per day due to the size and complexity.

The illustrative examples recognize and take into account that cleaning of tanks and lines between every cycle is undesirably time consuming and non-value added. The illustrative examples recognize and take into account that cleaning is complicated by fact that distribution lines are heated, which means resin in lines is partially cured during the injection process. The illustrative examples recognize and take into account that injection machines add an additional complication to production flow: an additional piece of equipment for every press set, consumables, requires process monitoring on the production floor for resin process parameters.

The illustrative examples recognize and take into account that Controlled Atmospheric Pressure Resin Infusion (CAPRI) infusion is an alternative to resin transfer molding. The illustrative examples recognize and take into account that CAPRI infusion is not fast enough for high rate production. The illustrative examples recognize and take into account that CAPRI infusion can only have a maximum driving force behind resin of approximately half an atmosphere.

The illustrative examples recognize and take into account that CAPRI is a single-sided tool process. The illustrative examples recognize and take into account that some aerospace grade part quality standards call for closed mold tooling.

The illustrative examples recognize and take into account that it would be desirable to provide a resin infusion method and tooling that can enable high rate production. The illustrative examples recognize and take into account that it would be desirable to provide a resin infusion method and tooling that can enable at least one of increased infusion quality, reduced tool cleaning time, or faster part infusion.

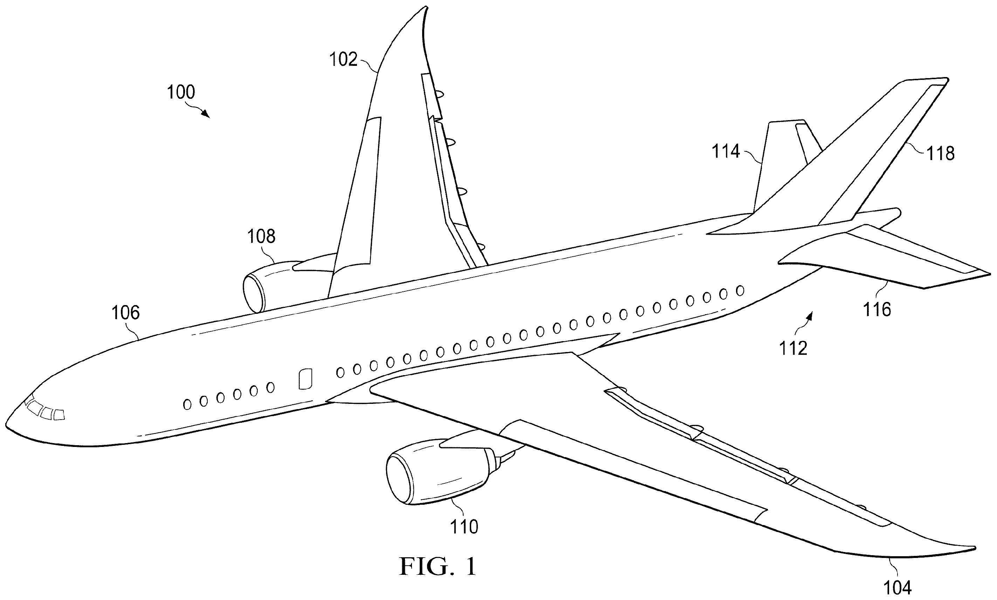

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have at least one composite structure manufactured using the resin infusion tool of the illustrative examples. For example, at least one of wing **102,** wing **104,** body **106,** or a portion thereof can be manufactured using the resin infusion tool of the illustrative examples. Aircraft **100** is an example of an aircraft that can have at least one composite structure manufactured using method **1300.**

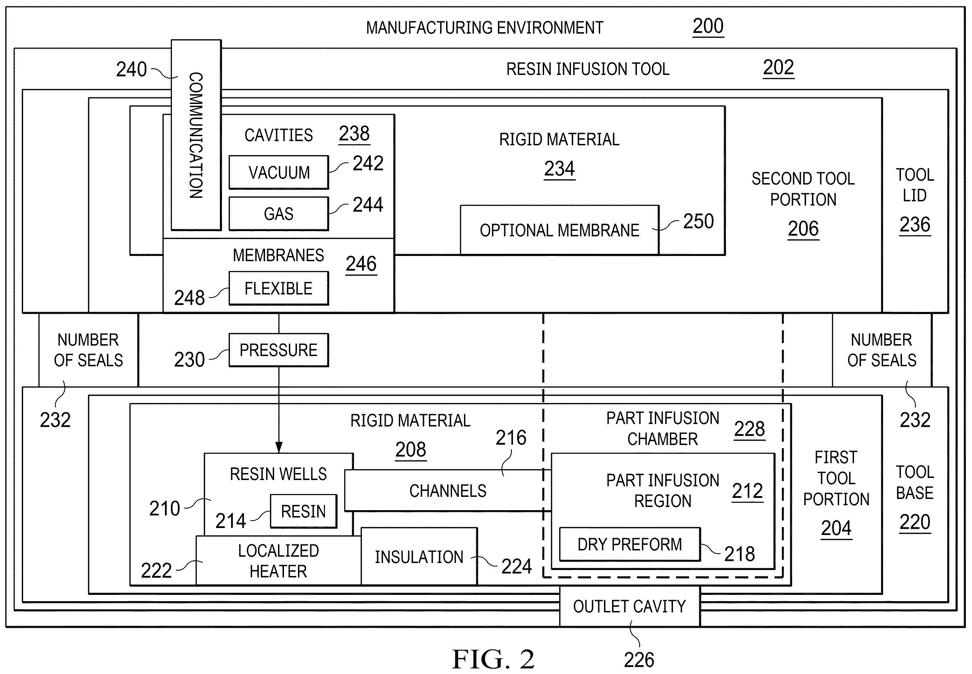

Turning now to **Figure 2****,** an illustration of a block diagram of a manufacturing environment is depicted in accordance with an illustrative embodiment. Resin infusion tool **202** in manufacturing environment **200** can be used to form a composite structure of aircraft **100** of **Figure 1****.**

Resin infusion tool **202** comprises first tool portion **204** of resin infusion tool **202** comprising rigid material **208** (for example a first rigid material) with part infusion region **212** and resin wells **210** formed in the (first) rigid material **208** adjacent part infusion region **212,** and second tool portion **206** of resin infusion tool **202** comprising rigid material **234** (for example a second rigid material) and configured to seal to first tool portion **204** to form part infusion chamber **228** comprising part infusion region **212.**

Resin wells **210** allow for introduction of resin **214** to resin infusion tool **202** prior to infusion of dry preform **218.** Resin wells **210** allow for placing resin **214** into first tool portion **204** prior to sealing first tool portion **204** and second tool portion **206** to form resin infusion tool **202.**

Resin wells **210** can be placed in areas which would be difficult to route through traditional resin transfer molding tooling. Drilled inlets can only go in one or two directions to allow for drilling and cleaning. Channels **216** could have complex geometry. Cleanout of channels **216** allows for ease of cleanout. Resin wells can be placed in 'trapped' areas, such as within a cutout. Resin **214** can be introduced to resin wells **210** as a pre-mixed resin. Resin **214** is placed into resin wells **210** as resin tablets.

As depicted, resin wells **210** are filled with resin **214.** Resin **214** is pre-mixed before being placed into resin wells **210.** Resin **214** takes any desirable form that can be handled and placed into resin wells **210.** In some illustrative examples, placing resin **214** into resin wells **210** comprises placing pre-portioned resin tablets into resin wells **210.** In this illustrative example, resin **214** can be described as resin tablets, resin pucks, or any other desirable reference to a pre-shaped and pre-portioned volume of resin **214.**

In some illustrative examples, first tool portion **204** comprises tool base **220** of resin infusion tool **202.**

Second tool portion **206** comprises cavities **238** configured to overlie resin wells **210** in an assembled position. Resin infusion tool **202** further comprises flexible **248** membranes **246** covering cavities **238.** Cavities **238** have communication **240** outside of resin infusion tool **202** to at least one of a pressure source or a vacuum source. In some illustrative examples, vacuum **242** is introduced to cavities **238** during heating of resin **214** prior to infusion into dry preform **218.** In some illustrative examples, gas **244** is introduced into cavities **238** to expand flexible **248** membranes **246** to apply pressure **230** to resin **214.** In some illustrative examples, second tool portion **206** comprises tool lid **236** of resin infusion tool **202.**

Resin infusion tool **202** further comprises channels **216** in first tool portion **204** between resin wells **210** and part infusion chamber **228,** and connecting resin wells **210** to part infusion chamber **228.** In some illustrative examples, at least one resin well of resin wells **210** is connected to multiple channels of channels **216.** In some illustrative examples, at least one resin well of resin wells **210** is connected to another resin well of resin wells **210** by a spillway.

In some illustrative examples, each resin well of resin wells **210** have the same size and shape.

Number of seals **232** is connected to at least one of first tool portion **204** or second tool portion **206** and is configured to seal first tool portion **204** to second tool portion **206** for an infusion process.

In some illustrative examples, at least one localized heater **222** is positioned in first tool portion **204** to heat resin wells **210.** In some illustrative examples, insulation **224** is positioned in first tool portion **204** to thermally isolate part infusion region **212** from resin wells **210.**

In some illustrative examples, resin infusion tool **202** comprises first tool portion **204** of resin infusion tool **202** comprising rigid material **208** (for example a first rigid material) with part infusion region **212,** resin wells **210** formed in the (first) rigid material **208** adjacent part infusion region **212,** and channels **216** in first tool portion **204** connecting resin wells **210** to part infusion region **212;** second tool portion **206** of resin infusion tool **202** comprises rigid material **234** (for example a second rigid material) and configured to seal to first tool portion **204** to form part infusion chamber **228** comprising part infusion region **212;** flexible **248** membranes **246** attached to second tool portion **206** and configured to apply pressure **230** to resin **214** in resin wells **210;** and number of seals **232** connected to at least one of first tool portion **204** or second tool portion **206** and configured to seal first tool portion **204** to second tool portion **206** for an infusion process. In this illustrative example, second tool portion **206** comprises cavities **238** in the (second) rigid material **234** configured to overlie resin wells **210** in an assembled position, and wherein flexible **248** membranes **246** extend over cavities **238.**

Resin infusion tool **202** comprises strategically placed resin wells **210** defined within tool base **220.** Resin wells **210** are in fluid communication with one another for directing vacuum pressures and resin flow into dry preform **218,** which is a preform, are dry-fiber component. In some illustrative examples, pressure membranes, membranes **246** disposed within tool lid **236** and aligned with resin wells **210** to further enhance flow of resin **214.** In some illustrative examples, resin infusion tool **202** includes integral heating, and each of resin wells **210** can include individual heat controls for optimizing timing and viscosity of resin flow.

Resin infusion tool **202** utilizes on-tool resin storage and distribution with vacuum assist. In resin infusion tool **202,** resin wells **210** are integrated into resin infusion tool **202,** along with resin distribution channels, channels **216.** Resin **214** is loaded onto first tool portion **204** in solid or high viscosity form, but uncured. When loaded onto first tool portion **204,** resin **214** is still able to melt and flow. During a heating process, resin **214** melts or lowers in viscosity, vacuum pressure forces resin **214** into dry preform **218** and then the resulting infused part cures at temperature.

Clean up of resin infusion tool **202** is simple as all resin **214** is completely cured and is easily removed from tool surfaces of resin infusion tool **202.**

By utilizing pre-mixed resin, resin **214** is mixed in large batches in a facility designed for resin processing. Pre-mixed resin provides high levels of quality control and process monitoring possible and separated from the infusion cycle.

Resin Preparation (mixing) is separated from the infusion process. Mixing is performed at a batch level (maybe even off site by supplier) and can be monitored more regularly for quality. Undesirable quality in resin mixing can be identified prior to infusing resin **214** into dry preform **218.**

Resin infusion tool **202** comprises two tooled surfaces for profile and surface quality management. Infusion using resin infusion tool **202** provides a high level of control of resin fiber volume. Infusion using resin infusion tool **202** provides high heating and cooling rates with integrally heated tooling. On tool resin storage using resin wells **210** simplifies production system for medium rate part fabrication.

Resin infusion tool **202** comprises two (or more) part tools. In this illustrative example, resin infusion tool **202** comprises two part tools, first tool portion **204** and second tool portion **206.** Resin infusion tool **202** further comprises number of seals **232** and sealing surfaces. Compaction/Closing pressure is provided either by a standalone press or by pressure features integrated into the tool structure. Additional resin well features are integrated into the sealing plane, inside of first tool portion **204** in tool base **220** of resin infusion tool **202.**

Resin wells **210** are designed to evenly heat resin **214** to a controlled temperature, without allowing reaction to proceed in an uncontrolled manner (exotherm).
When resin infusion tool **202** is integrally heated, resin well area has a separate control/temperature circuit, so that a resin temperature, a temperature of resin **214,** can be different from a part temperature of dry preform **218.**

Dry preform **218** may be at a higher temperature for preform forming or drying. Insulation **224** in tool base **220** thermally isolates zones more effectively.

Resin wells **210** are connected to part infusion region **212** by a channel or channels of channels **216** which are above the surface of resin **214.**

Resin **214** does not flow into dry preform **218** until driven by pressure **230.** Channels **216** are open to vacuum **242** being drawn across dry preform **218** to assist with degassing of resin **214.** In some illustrative examples, vacuum is drawn through outlet cavity **226.** In some illustrative examples, resin wells **210** could have dedicated vacuum ports for degassing. In some illustrative examples, optional membrane **250** is present in second tool portion **206** to apply pressure over outlet cavity **226** during infusion of dry preform **218.** Outlet cavity **226** starts off empty. Outlet cavity **226** can fill with resin **214** once dry preform **218** is filled with resin **214.** Pressure can also be applied through the area of outlet cavity **226** as well using optional membrane **250.**

Resin outlets can be strategically placed to drive infusion. Resin outlets can be similar to wells, but empty at the start of the infusion process. Outlet cavity **226** can act as a resin outlet.

Resin outlets could be closed off by pressure behind matching membrane, static vacuum, or active vacuum to assist with resin flow. Resin outlet membranes could initially be open, but then pressurized at appropriate stage in process to either drive resin flow or provide hydrostatic pressure to infused part.

Pressure drops through dry preform **218** as a function of distance from an injection point. Adding additional pressure locations can increase pressure uniformity throughout the entirety of resin infusion tool **202.** Sensors in outlet cavities would be used to monitor flow of resin **214** through dry preform **218.**

Resin infusion tool **202** can be referred to as resin on tool resin transfer molding tooling. Tool lid **236** integrates tooling surfaces and pressure membranes, membranes **246.** Cavities **238** are recesses matching resin wells **210** machined into tool lid **236** and covered/closed with flexible **248** membranes **246.**

Each resin well of resin wells **210** has one or more inlet channels of channels **216** into part infusion chamber **228** to infuse resin **214** into dry preform **218.** Multiple inlet channels allows for increased control of resin flow or accelerated infusion by moving resin **214** faster to dry preform **218** or through more areas of dry preform **218.**

Membranes **246** allow for controlled application of pressure **230** to resin **214** to drive resin flow into dry preform **218.** Pressure **230** could be atmospheric or higher. Pressure **230** could come from air, inert gas, or liquid. Liquid at a higher temperature than resin **214** could be utilized if there is a benefit to quickly raising the temperature of the resin **214** for infusion. The benefits could include reducing viscosity or accelerating the cure cycle.

Discrete control of separate resin wells **210** and membranes **246** allows for controlled infusion of dry preform **218.** In some illustrative examples, resin wells **210** could be pressurized sequentially if there was benefit of infusing some regions of dry preform **218** before others. In this illustrative example, tool lid **236** integrates discrete pressure controlling membranes **246** over resin wells **210.**

In some illustrative examples, resin **214** can be prepared in a dedicated facility. Resin **214** and dry preform **218** are placed in cleaned and prepared tool base **220.** Tool lid **236** is placed over tool base **220** and pressed to close resin infusion tool **202.**

In some illustrative examples, vacuum leak checks can be performed for resin infusion tool **202.** Heating of resin infusion tool **202** can begin to raise resin **214** to a degassing temperature and raise dry preform **218** to a preform drying temperature.

In some illustrative examples, a dwell is performed at the desired temperature(s) for degassing and drying. To begin infusion, membranes **246** over resin wells **210** are pressurized to drive resin **214** into dry preform **218.** In some illustrative examples, membranes **246** are pressurized at different times to infuse dry preform **218.** Membranes **246** and optionally optional membrane **250** are pressurized per an infusion process to provide a full infusion of dry preform **218.** In some illustrative examples, a pressure sensor in the outlet cavity **226** can indicate resin **214** is present in outlet cavity **226.**

In some illustrative examples, after infusion is complete, membranes **246** remain pressurized to maintain hydrostatic resin pressure in the infused part comprising resin **214** and dry preform **218.** After infusing resin **214** into dry preform **218** to form the infused part, part cure can be performed. In some illustrative examples, to cure the infused part, resin infusion tool **202** heats to cure temperature (if different than infusion temperature).

In some illustrative example, after curing the infused part, resin infusion tool **202** is cooled to a part removal temperature. In some illustrative examples, after infusing and curing, the cured part is removed from resin infusion tool **202.** After removal of the cured part, resin infusion tool **202** is cleaned of excess cured resin.

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although flexible membranes are described, other pressure applicators can be used. In some illustrative examples, mechanical applicators such as plungers could be utilized instead of flexible membranes.

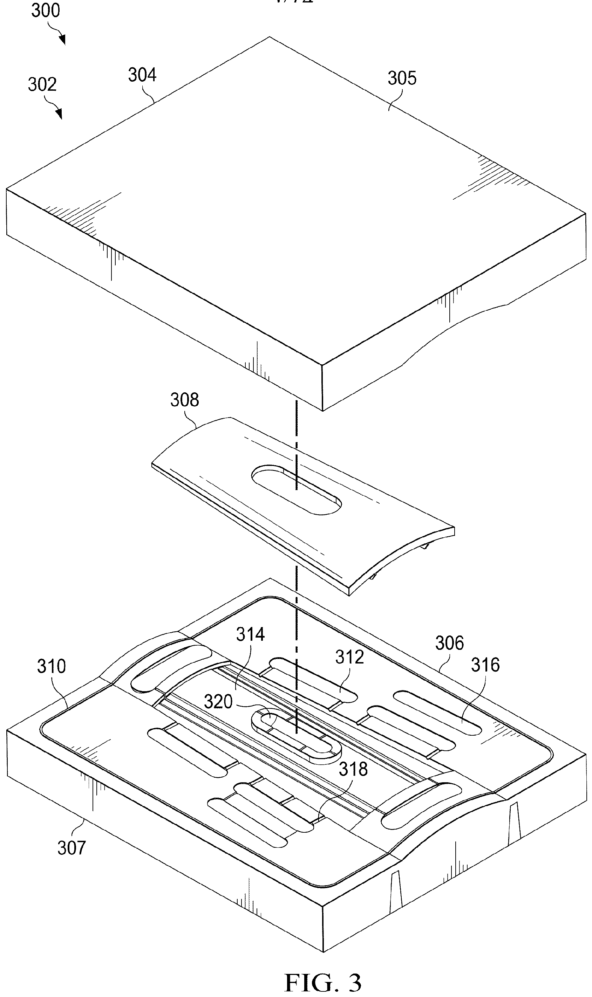

Turning now to **Figure 3****,** an illustration of an exploded view of a resin infusion tool is depicted in accordance with an illustrative embodiment. Resin infusion tool **302** can be used to manufacture a composite component of aircraft **100** of **Figure 1****.** Resin infusion tool **302** can be a physical implementation of resin infusion tool **202** of **Figure 2****.**

View **300** is an exploded view of resin infusion tool **302.** Resin infusion tool **302** comprises first tool portion **306** of resin infusion tool **302** and second tool portion **304** of resin infusion tool **302.** In this illustrative example, second tool portion **304** comprises tool lid **305.** In this illustrative example, first tool portion **306** comprises tool base **307.** First tool portion **306** comprises a (first) rigid material with part infusion region **314** and resin wells **312** formed in the (first) rigid material adjacent part infusion region **314.** Second tool portion **304** of resin infusion tool **302** comprises a (second) rigid material and is configured to seal to first tool portion **306** to form a part infusion chamber comprising part infusion region **314.**

The resin infusion tool **302** further comprises number of seals **310** connected to at least one of first tool portion **306** or second tool portion **304** and configured to seal first tool portion **306** to second tool portion **304** for an infusion process. In this illustrative example, number of seals **310** comprises a seal connected to tool base **307.**

Prior to infusing resin into dry preform **308,** resin **316** is placed into resin wells **312,** dry preform **308** is positioned into part infusion region **314,** and tool lid **305** is sealed to tool base **307** using number of seals **310.** As depicted, resin wells **312** are filled with resin **316.** Resin **316** is pre-mixed before being placed into resin wells **312.** Resin **316** takes any desirable form that can be handled and placed into resin wells **312**. In some illustrative examples, placing resin **316** into resin wells **312** comprises placing pre-portioned resin tablets into resin wells **312.** In this illustrative example, resin **316** can be described as resin tablets, resin pucks, or any other desirable reference to a pre-shaped and pre-portioned volume of resin.

In this illustrative example, resin wells **312** are distributed around part infusion region **314.** Resin wells **312** can be positioned in any desirable locations to desirably distribute resin **316** to dry preform **308** that will be positioned in part infusion region **314.** Positions of resin wells **312** are designed based on a size, shape, and thickness of dry preform **308.** In some illustrative examples, at least one of a quantity of resin wells **312,** positions of resin wells **312,** or shapes of resin wells **312** are configured to efficiently infuse resin **316** into dry preform **308.** As depicted, each resin well of resin wells **312** has the same size and shape. In other illustrative examples, at least one resin well of resin wells **312** can have a different size or shape than the remaining resin wells.

A part infusion chamber (not depicted) is formed by sealing tool lid **305** to tool base **307.** The part infusion chamber comprises part infusion region **314.** To infuse dry preform **308** with resin **316,** resin **316** is heated and pressure is applied to resin **316.** In this illustrative example, channels **318** in first tool portion **306** are between resin wells **312** and part infusion chamber (not depicted) and connect resin wells **312** to the part infusion chamber. Channels **318** in first tool portion **306** connect resin wells **312** to part infusion region **314.** In some illustrative examples, at least one resin well of resin wells **312** is connected to multiple channels of channels **318.**

Outlet cavity **320** can be used to evacuate part infusion region **314.** In this illustrative example, outlet cavity **320** is formed within an opening of dry preform **308.**

In some illustrative examples, vacuum is drawn through outlet cavity **320** to degas resin in resin wells **312.** In some illustrative examples, resin wells **312** could have dedicated vacuum ports for degassing.

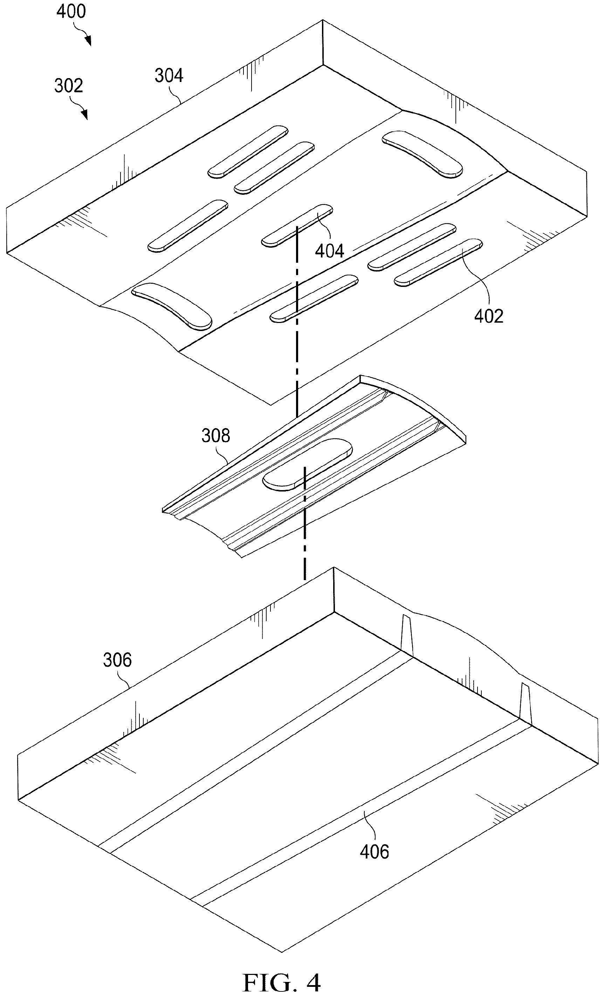

Turning now to **Figure 4****,** an illustration of a bottom exploded view of a resin infusion tool is depicted in accordance with an illustrative embodiment. View **400** is a bottom isometric view of resin infusion tool **302.** Resin infusion tool **302** further comprises flexible membranes **402** connected to second tool portion **304.** Flexible membranes **402** are configured to overlie resin wells **312** in **Figure 3** when tool lid **305** is sealed to tool base **307.** Flexible membranes **402** cover cavities (not depicted) in second tool portion **304.**

Flexible membranes **402** are configured to apply pressure to resin **316** in resin wells **312.** Flexible membranes **402** can be expanded to apply pressure to resin **316** after heating resin **316.** In this illustrative example, an additional flexible membrane, flexible membrane **404,** is positioned in second tool portion **304** to cover outlet cavity **320** in first tool portion **306.**

In some illustrative examples, resin infusion tool **302** comprises at least one localized heater (not depicted) positioned in first tool portion **306** to heat the resin wells, resin wells **312** of **Figure 3****.** In some illustrative examples, it is desirable to hold dry preform **308** at a different temperature than resin **316** of **Figure 3****.** In some illustrative examples, resin **316** of **Figure 3** is locally heated by at least one localized heater in first tool portion **306.** In some illustrative examples, dry preform **308** is held at a lower temperature than resin **316** by thermally isolating part infusion region **314.** In this illustrative example, resin infusion tool **302** comprises insulation **406** positioned in first tool portion **306** to thermally isolate part infusion region **314** from resin wells **312.** In other illustrative examples, insulation **406** can take any desirable size, shape, position, or material in first tool portion **306.**

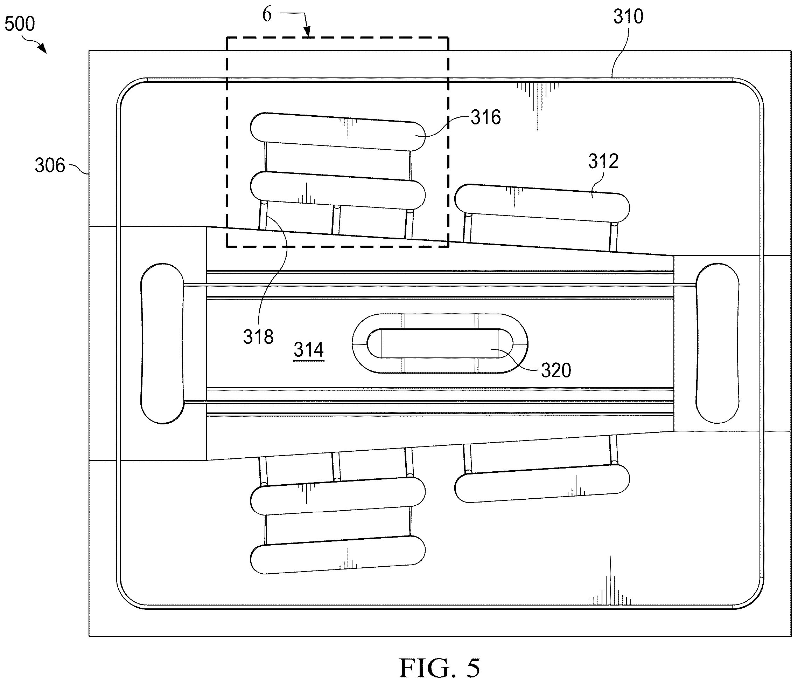

Turning now to **Figure 5****,** an illustration of a top view of a first tool portion is depicted in accordance with an illustrative embodiment. View **500** is a top view of first tool portion **306.** Resin wells **312** and channels **318** are more clearly seen in view **500.** Channels **318** may also be referred to as resin distribution troughs. Sizes, placement, and quantities of channels **318** are configured based on a desired resin infusion for dry preform **308** of **Figure 3****.** Multiple infusion troughs connected to each resin well of resin wells **312** move resin **316** quickly.

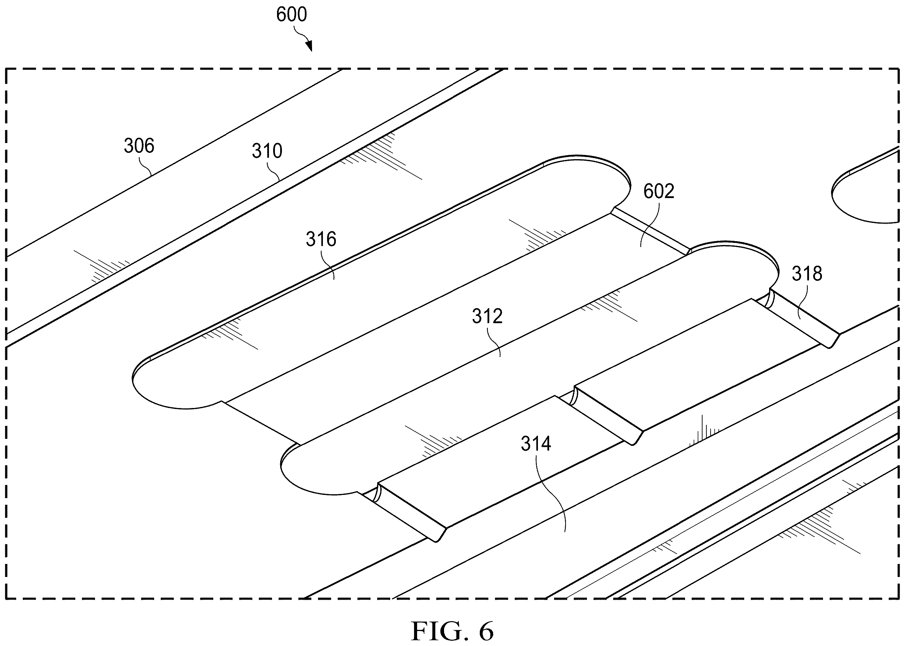

Turning now to **Figure 6****,** an illustration of an isometric view of a piece of a first tool portion is depicted in accordance with an illustrative embodiment.

View **600** is an isometric view within box **6** of **Figure 5****.** View **600** more clearly depicts spillway **602** connecting two resin wells of resin wells **312.** Spillway **602** quickly moves resin **316** from one well to another (resin volume can only be so large before exotherm becomes a risk) . Resin **316** is below a level of channels **318** prior to application of pressure.

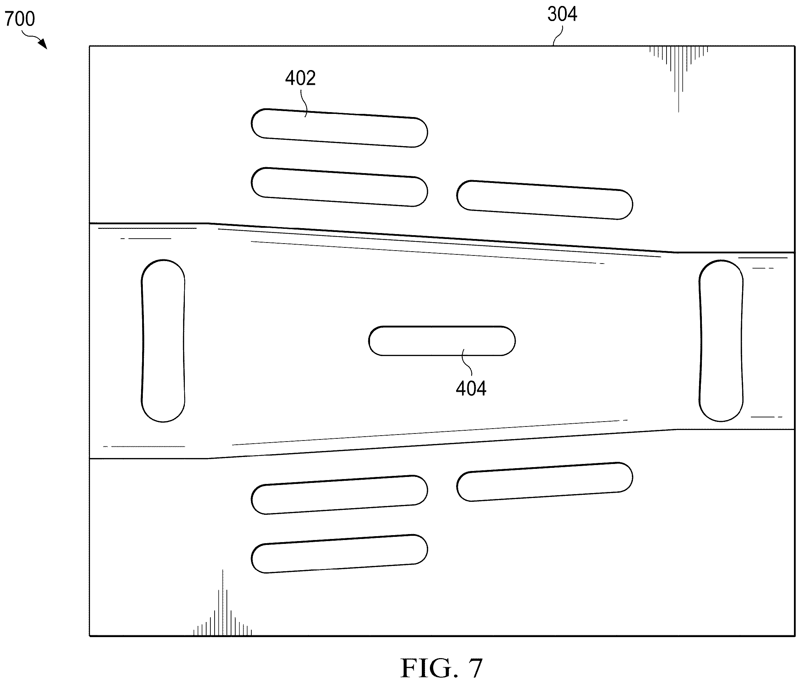

Turning now to **Figure 7****,** an illustration of a bottom view of a second tool portion is depicted in accordance with an illustrative embodiment. View **700** is a bottom view of second tool portion **304.** Positions of membranes **402** connected to second tool portion **304** can be more clearly seen in view **700.**

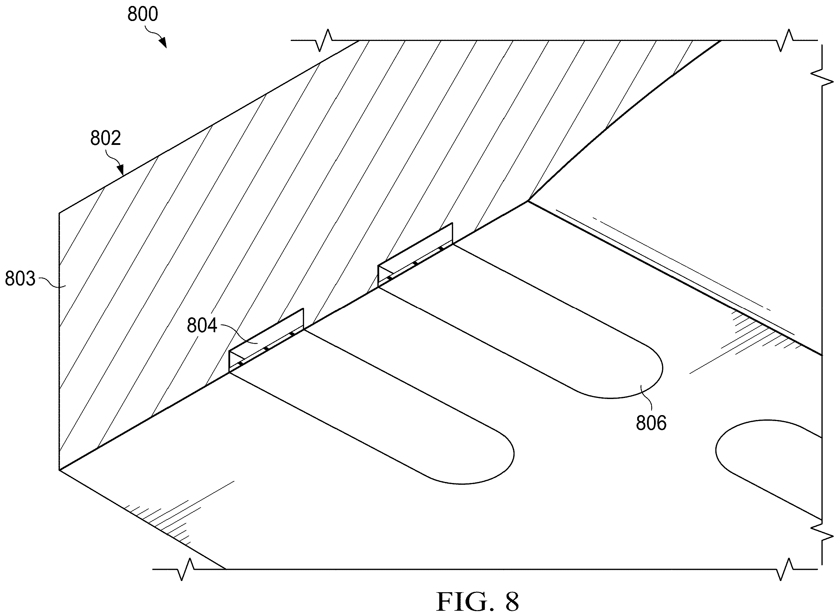

Turning now to **Figure 8****,** an illustration of an isometric view of a cross-section of a second tool portion is depicted in accordance with an illustrative embodiment. View **800** is a cross-sectional view of second tool portion **802.** Second tool portion **802** can be the same as second tool portion **304** of **Figures 3-7****.** Second tool portion **304** takes the form of tool lid **803.** Second tool portion **802** comprises cavities **804.** Membranes **806** are connected to second tool portion **802** and cover cavities **804.** Each of membranes **806** can be controlled to desirably apply pressure to resin using membranes **806.** In some illustrative examples, membranes **806** are individually controllable. In these illustrative examples, valves can individually control application of vacuum or positive pressure into each cavity of cavities **804.**

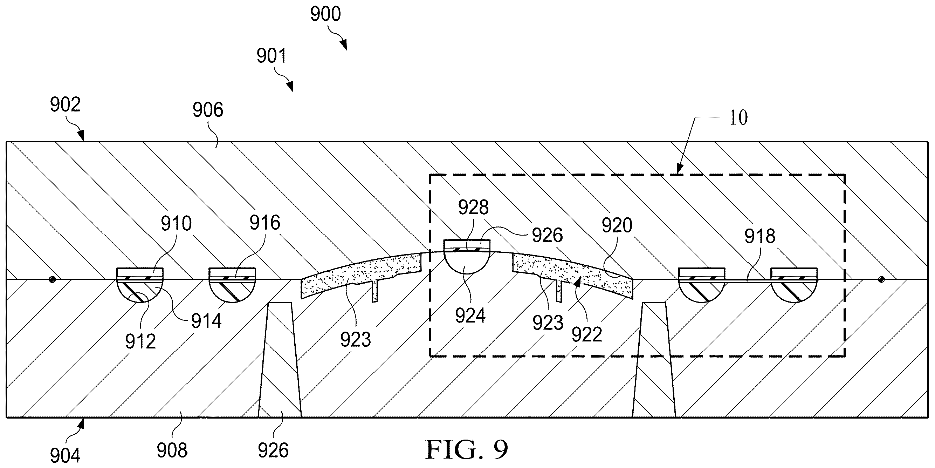

Turning now to **Figure 9****,** an illustration of a cross-sectional view of a resin infusion tool is depicted in accordance with an illustrative embodiment.
View **900** is a cross-sectional view of an initial set-up of resin infusion tool **901** for resin infusion. In view **900,** dry preform **923** is present in part infusion chamber **920.** Part infusion chamber **920** is formed by sealing first tool portion **904** to second tool portion **902.** Part infusion chamber **920** comprises part infusion region **922** in first tool portion **904.** In this illustrative example, second tool portion **902** comprises tool lid **906.** In this illustrative example, first tool portion **904** comprises tool base **908.** Resin wells **912** are present in a (first) rigid material of first tool portion **904.** Resin **914** is present in resin wells **912.** Cavities **910** are present in second tool portion **902.** Cavities **910** overlie resin wells **912.** Membranes **916** are connected to second tool portion **902.** Membranes **916** cover cavities **910.** Membranes **916** are configured to apply pressure to resin **914** during resin infusion. Spillway **918** connects resin wells **912.**

Cavity **926** is present over outlet cavity **924.** Outlet cavity **924** in first tool portion **904** is used to draw a vacuum in part infusion chamber **920.** Vacuum drawn through outlet cavity **924** is provided for degassing resin **914** and drying dry preform **923.** Resin wells **912** are connected to part infusion chamber **920** through spillway **918** and resin distribution channels for degassing of resin **914** after melting resin **914.** Membrane **928** covers cavity **926** and can be used to apply pressure during resin infusion.

In **Figure 9****,** a lid of resin infusion tool **901,** first tool portion **904,** has been closed. Vacuum can be drawn on dry preform **923.** Afterwards, resin infusion tool **901** is heated to degassing/preform drying temperature. In some illustrative examples, temperatures at resin wells **912** and dry preform **934** may be different depending on the process and material characteristics. Resin infusion tool **901** is sealed from outside environment.

Vacuum can be drawn behind flexible membranes **916** over resin wells **912.** Resin wells **912** are connected to part infusion chamber **920** through spillways and resin distribution troughs for degassing of the liquid resin after melting. Vacuum can be drawn through outlet cavity **924** for degassing and preform drying.

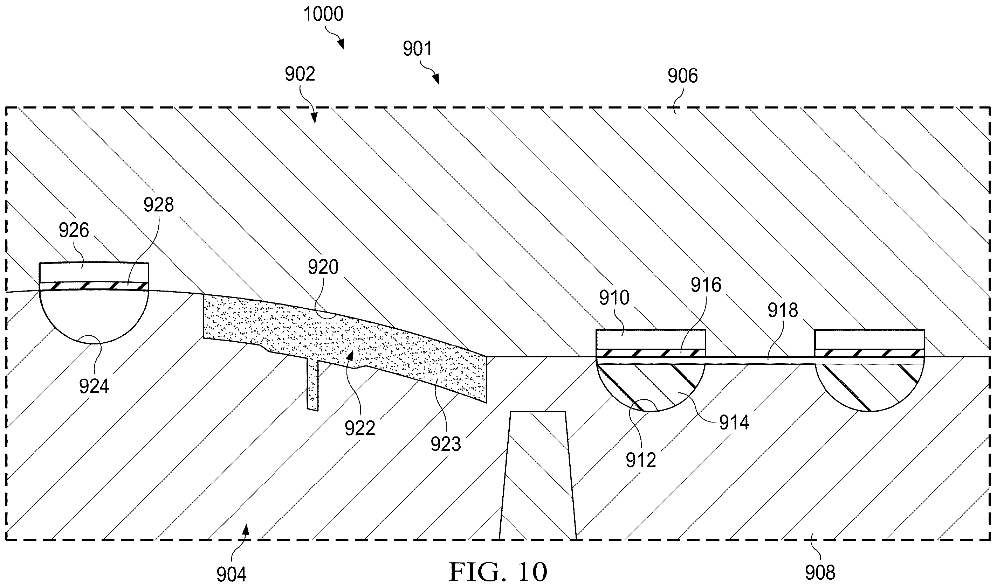

Turning now to **Figure 10****,** an illustration of a cross-sectional view of a section of the resin infusion tool is depicted in accordance with an illustrative embodiment. View **1000** is a view in box **10** of **Figure 9****.** View **1000** is a closer view of one side of resin infusion tool **901** prior to resin infusion. View **1000** is a view after closing tool lid **906.** Resin infusion tool **901** is sealed from the outside environment. Vacuum is drawn on dry preform **923.** Resin **914** in resin infusion tool **901** is heated to a degassing temperature. Dry preform **923** is heated to a preform drying temperature. In some illustrative examples, the temperature for resin **914** and dry preform **923** are different.

In some illustrative examples, during heating, vacuum is drawn behind flexible membranes **916** over resin wells **912.** Resin wells **912** are connected to the preform cavity, part infusion chamber **920,** through spillways and resin distribution channels/troughs for degassing of liquid resin **914** after melting.

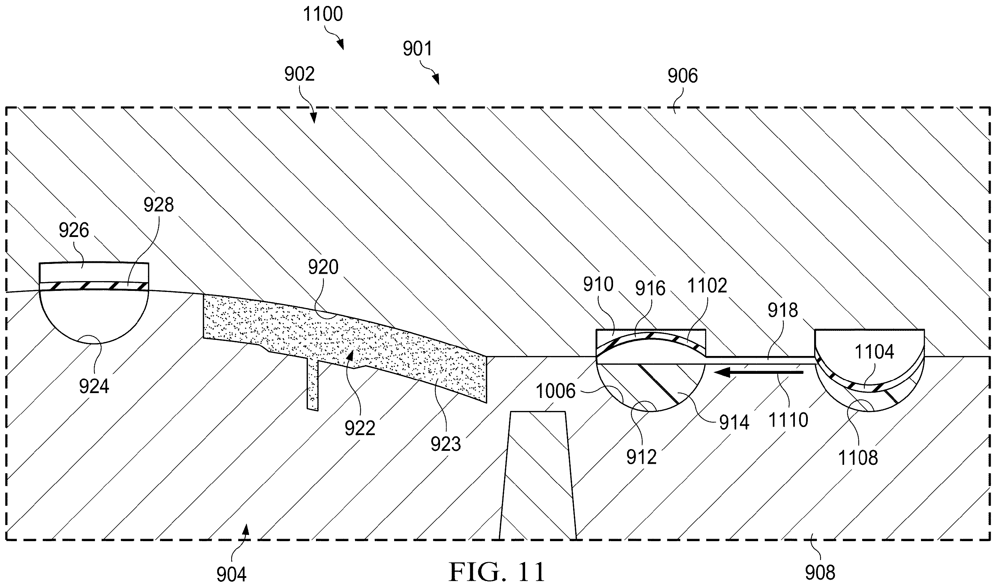

Turning now to **Figure 11****,** an illustration of a cross-sectional view of a section of the resin infusion tool during infusion is depicted in accordance with an illustrative embodiment. View **1100** is a view of beginning infusion. In view **1100,** flexible membranes **916** are being used to selectively apply pressure to resin **914** in resin wells **912.** Flexible membranes **916** comprise flexible membrane **1102** and flexible membrane **1104.** Flexible membrane **1102** is positioned over resin **914** in resin well **1106.** Flexible membrane **1104** is positioned over resin **914** in resin well **1108.**

In view **1100,** pressure is applied by flexible membrane **1104** to resin **914** in resin well **1108.** Pressure has been introduced to the cavity behind flexible membrane **1104** to expand flexible membrane **1104** into resin well **1108.** A vacuum is still pulled in the cavity behind flexible membrane **1102.** By applying pressure by flexible membrane **1104** while pulling vacuum in outlet cavity **924,** resin flow **1110** occurs. Resin flow **1110** is through spillway **918** towards resin well **1106.**

In view **1100,** pressure differential is utilized to drive resin **914** into dry preform **934.** Pressure over flexible membranes **916** can be timed to drive resin **914** into dry preform **934.**

Vacuum can be maintained in some areas and then the pressure can be sequentially introduced for desired resin flow. Actuation may not necessarily be sequential. Actuation can be timed to drive resin for a desired infusion of dry preform **934.**

Grooves in resin infusion tool **901** can be present to flow resin **914** into hard to reach places, such as in blade stringers. Vacuum can be maintained in cavity **926** with membrane **928** over outlet cavity **924** to assist with driving resin **914** through dry preform **934.**

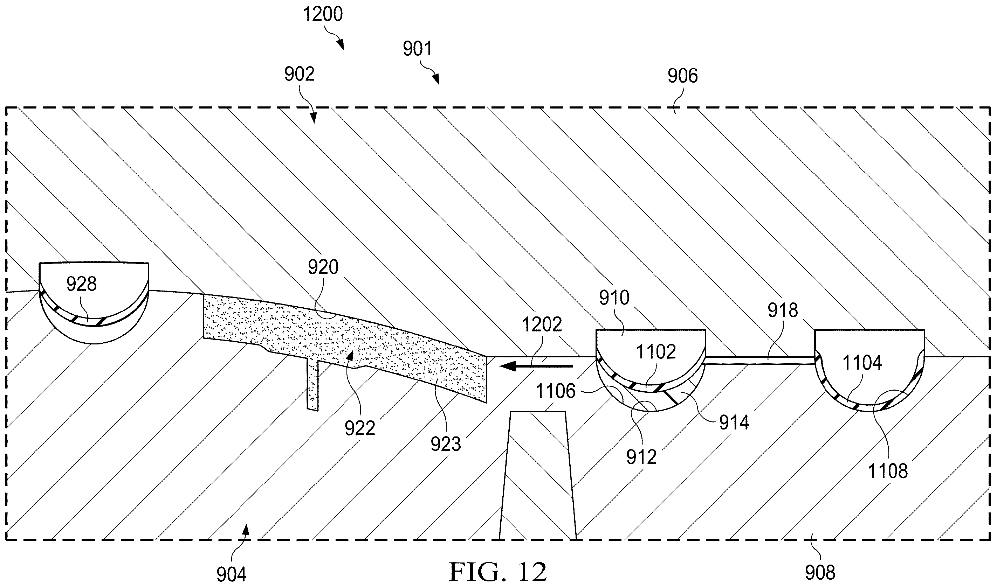

Turning now to **Figure 12****,** an illustration of a cross-sectional view of a section of the resin infusion tool during infusion is depicted in accordance with an illustrative embodiment. In view **1200,** pressure has been applied by flexible membranes **916** to infuse resin **914** into dry preform **923.** In view **1200,** resin **914** has traveled out of resin well **1108** and into resin well **1106.** In view **1200,** pressure by flexible membrane **1104** drove infusion of resin **914.** As depicted, flexible membrane **1102** has been pressurized to press resin from resin well **1106.** By applying pressure by flexible membrane **1102** while pulling vacuum in outlet cavity **924,** resin flow **1202** occurs. Resin flow **1202** is out of resin well **1106** and into part infusion chamber **920.**

In some illustrative examples, view **1200** is a view of the end of infusion of resin **914.** In this illustrative example, pressure is maintained on resin **914.**

After all membranes **916** over resin wells **912** have pressurized, driving resin **914** into dry preform **923,** resin **914** will begin to enter outlet cavity **924.** Once resin **914** is sensed via pressure sensor or other manner in outlet cavity **924,** pressure can be applied above membrane **928** for backpressure into part infusion chamber **920.**

Backpressure on resin **914** in dry preform **923** at the end of infusion can mitigate undesirable quality caused by resin shrinkage during cure. After the cure cycle is complete, resin infusion tool **901** will be opened, the cured part will be removed, and cured excess resin will be cleaned from channels and resin wells **912.**

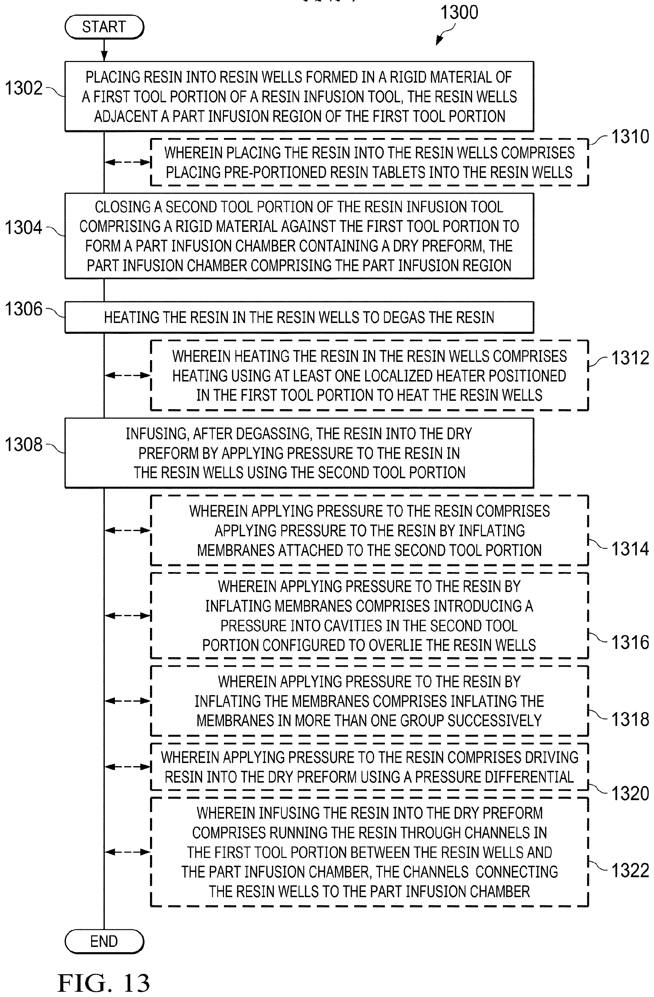

Turning now to **Figure 13****,** a flowchart of a method of infusing resin into a composite preform is depicted in accordance with an illustrative embodiment. Method **1300** can be performed to manufacture a composite component of aircraft **100** of **Figure 1****.** Method **1300** can be performed using resin infusion tool **202** of **Figure 2****.** Method **1300** can be performed using resin infusion tool **302** of **Figures 3-7****.** Method **1300** can be performed using second tool portion **802** of **Figure 8****.** Method **1300** can be performed using resin infusion tool **901** of **Figures 9-12****.**

Method **1300** places resin into resin wells formed in a (first) rigid material of a first tool portion of a resin infusion tool, the resin wells adjacent a part infusion region of the first tool portion (operation **1302**). Method **1300** closes a second tool portion of the resin infusion tool comprising a (second) rigid material against the first tool portion to form a part infusion chamber containing a dry preform, the part infusion chamber comprising the part infusion region (operation **1304**)**.** Method **1300** heats the resin in the resin wells to degas the resin (operation **1306**)**.** Method **1300** infuses, after degassing, the resin into the dry preform by applying pressure to the resin in the resin wells using the second tool portion (operation **1308**)**.** Afterwards, method **1300** terminates.

In some illustrative examples, vacuum is pulled across the resin wells during the heating to degas the resin. In some illustrative examples, vacuum is applied to the part infusion chamber prior to heating. In some illustrative examples, vacuum is applied to the part infusion chamber during degas and during resin infusion.

In some illustrative examples, placing the resin into the resin wells comprises placing pre-portioned resin tablets into the resin wells (operation **1310**)**.** In some illustrative examples, the pre-portioned resin tablets are the same size and shape.

In some illustrative examples, heating the resin in the resin wells comprises heating using at least one localized heater positioned in the first tool portion to heat the resin wells (operation **1312**)**.** In some illustrative examples, each resin well of the resin wells is independently heated based on a desired infusion process.

In some illustrative examples, applying pressure to the resin comprises applying pressure to the resin by inflating membranes attached to the second tool portion (operation **1314**)**.** In some illustrative examples, applying pressure to the resin by inflating membranes comprises introducing a pressure into cavities in the second tool portion configured to overlie the resin wells (operation **1316).** In some illustrative examples, applying pressure to the resin by inflating the membranes comprises inflating the membranes in more than one group successively (operation **1318**)**.** In some illustrative examples, applying pressure to the resin comprises driving resin into the dry preform using a pressure differential (operation **1320**)**.**

In some illustrative examples, infusing the resin into the dry preform comprises running the resin through channels in the first tool portion between the resin wells and the part infusion chamber, the channels connecting the resin wells to the part infusion chamber (operation **1322**)**.** In some illustrative examples, infusing the resin into the dry preform comprises running resin into a spillway between adjacent resin wells.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **1310** through operation **1322** may be optional.

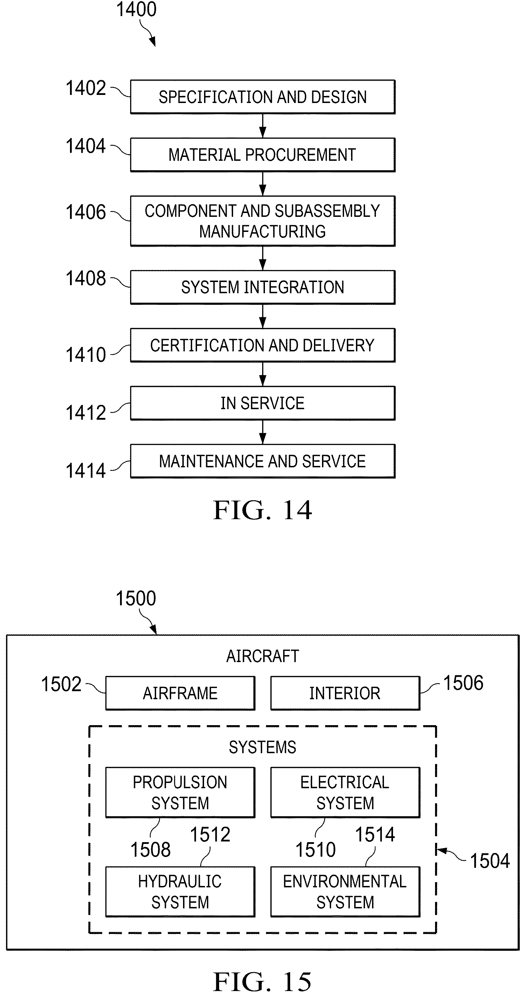

Illustrative embodiments of the present disclosure may be described in the context of aircraft manufacturing and service method **1400** as shown in **Figure 14** and aircraft **1500** as shown in **Figure 15****.** Turning first to **Figure 14****,** an illustration of an aircraft manufacturing and service method in a form of a block diagram is depicted in accordance with an illustrative embodiment. During pre-production, aircraft manufacturing and service method **1400** may include specification and design **1402** of aircraft **1500** in **Figure 15** and material procurement **1404.**

During production, component and subassembly manufacturing **1406** and system integration **1408** of aircraft **1500** takes place. Thereafter, aircraft **1500** may go through certification and delivery **1410** in order to be placed in service **1412.** While in service **1412** by a customer, aircraft **1500** is scheduled for routine maintenance and service **1414,** which may include modification, reconfiguration, refurbishment, or other maintenance and service.

Each of the processes of aircraft manufacturing and service method **1400** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 15****,** an illustration of an aircraft in a form of a block diagram is depicted in which an illustrative embodiment may be implemented. In this example, aircraft **1500** is produced by aircraft manufacturing and service method **1400** of **Figure 14** and may include airframe **1502** with plurality of systems **1504** and interior **1506.** Examples of systems **1504** include one or more of propulsion system **1508,** electrical system **1510,** hydraulic system **1512,** and environmental system **1514.** Any number of other systems may be included.

Apparatuses and methods embodied herein may be employed during at least one of the stages of aircraft manufacturing and service method **1400.** One or more illustrative embodiments may be manufactured or used during at least one of component and subassembly manufacturing **1406,** system integration **1408,** in service **1412,** or maintenance and service **1414** of **Figure 14****.**

The illustrative examples provide a process and system for infusing dry fiber structures during high-rate manufacturing applications. The illustrative examples provide a system comprising mating tooling configured to define a closed, air-tight mold cavity, when fitted together. The illustrative examples provide tooling that comprises at least one base tool defining a plurality of resin wells, and several channels fluidly connecting the resin wells. Each of the resin wells may be individually heated, independent of the integrally heated tooling, to optimize timing and flow of resin into a structural preform. A predefined mixture of resin is loaded into each of the resin wells in a high-viscosity, but un-cured form which melts to a lower-viscosity at a predefined time to flow into the preform under vacuum pressure within the tooling. Pressure membranes are coupled to the tooling lid and aligned with each of the resin wells for applying predefined individual forces to the resin wells to further enhance flow. In some illustrative examples, the tooling base can further include insulation to help isolate heat between the resin wells. The illustrative examples provide a high-rate solution for producing high-quality structural components via resin infusion of dry fiber preforms, using pre-mixed, un-cured resin blocks that are strategically melted through the process for optimizing resin flow into the component and preventing exotherm reactions from the resin. The illustrative examples will significantly improve part quality and help to increase rates associated with resin infusion processes.

Furthermore, the disclosure can be defined by the following non-limiting examples:
Example 1: A resin infusion tool 202 comprising: a first tool portion 204 comprising a first rigid material 208 with a part infusion region 212 and resin wells 210 formed in the first rigid material 208 adjacent the part infusion region 212; and a second tool portion 206 comprising a second rigid material 234 and configured to seal to the first tool portion 204 to form a part infusion chamber 228 comprising the part infusion region 212.
Example 2: The resin infusion tool 202 of Example 1, wherein the second tool portion 206 comprises cavities 238 configured to overlie the resin wells 210 in an assembled position, and the resin infusion tool 202 further comprising: flexible membranes (246, 248) covering the cavities 238.
Example 3: The resin infusion tool 202 of Example 1 or 2, further comprising: channels 216 in the first tool portion 204 between the resin wells 210 and the part infusion chamber 228 and connecting the resin wells 210 to the part infusion chamber 228.
Example 4: The resin infusion tool 202 of Example 3, wherein at least one resin well 210 of the resin wells 210 is connected to multiple channels 216 of the channels 216.
Example 5: The resin infusion tool 202 of any one of Examples 1 to 4, further comprising: a number of seals 232 connected to at least one of the first tool portion 204 or the second tool portion 206 and configured to seal the first tool portion 204 to the second tool portion 206 for an infusion process.
Example 6: The resin infusion tool 202 of any one of Examples 1 to 5, wherein the first tool portion 204 comprises a tool base 220 of the resin infusion tool 202.
Example 7: The resin infusion tool 202 of any one of Examples 1 to 6, wherein the second tool portion 206 comprises a tool lid 236 of the resin infusion tool 202.
Example 8: The resin infusion tool 202 of any one of Examples 1 to 7, wherein each resin well 210 of the resin wells 210 have the same size and shape.
Example 9: The resin infusion tool 202 of any one of Examples 1 to 8, further comprising: at least one localized heater 222 positioned in the first tool portion 204 to heat the resin wells 210.
Example 10: The resin infusion tool 202 of any one of Examples 1 to 9, further comprising: insulation 224 positioned in the first tool portion 204 to thermally isolate the part infusion region 212 from the resin wells 210.
Example 11: A method 1300 of infusing a resin 214 into a composite preform comprising: placing 1302 the resin 214 into resin wells 210 formed in a first rigid material 208 of a first tool portion 204 of a resin infusion tool 202, the resin wells 210 adjacent a part infusion region 212 of the first tool portion 204; closing 1304 a second tool portion 206 of the resin infusion tool 202 comprising a second rigid material 234 against the first tool portion 204 to form a part infusion chamber 228 containing a dry preform 218, the part infusion chamber 228 comprising the part infusion region 212; heating 1306 the resin 214 in the resin wells 210 to degas the resin 214; and infusing 1308, after degassing, the resin 214 into the dry preform 218 by applying pressure 230 to the resin 214 in the resin wells 210 using the second tool portion 206.
Example 12: The method 1300 of Example 11, wherein 1314 applying pressure 230 to the resin 214 comprises applying pressure 230 to the resin 214 by inflating membranes 246 attached to the second tool portion 206.
Example 13: The method 1300 of Example 12, wherein 1316 applying pressure 230 to the resin 214 by inflating membranes 246 comprises introducing pressure 230 into cavities 238 in the second tool portion 206 configured to overlie the resin wells 210.
Example 14: The method 1300 of Example 12 or 13, wherein 1318 applying pressure 230 to the resin 214 by inflating the membranes 246 comprises inflating the membranes 246 in more than one group successively.
Example 15: The method 1300 of any one of Examples 11 to 14, wherein 1320 applying pressure 230 to the resin 214 comprises driving resin 214 into the dry preform 218 using a pressure differential.
Example 16: The method 1300 of any one of Examples 11 to 15, wherein 1310 placing the resin 214 into the resin wells 210 comprises placing pre-portioned resin 214 tablets into the resin wells 210.
Example 17: The method 1300 of any one of Examples 11 to 16, wherein 1312 heating the resin 214 in the resin wells 210 comprises heating using at least one localized heater positioned in the first tool portion 204 to heat the resin wells 210.
Example 18: The method 1300 of any one of Examples 11 to 17, wherein 1322 infusing the resin 214 into the dry preform 218 comprises running the resin 214 through channels 216 in the first tool portion 204 between the resin wells 210 and the part infusion chamber 228, the channels 216 connecting the resin wells 210 to the part infusion chamber 228.
Example 19: A resin infusion tool 202 comprising: a first tool portion 204 of the resin infusion tool 202 comprising a first rigid material 208 with a part infusion region 212, resin wells 210 formed in the first rigid material 208 adjacent the part infusion region 212, and channels 216 in the first tool portion 204 connecting the resin wells 210 to the part infusion region 212; a second tool portion 206 of the resin infusion tool 202 comprising a second rigid material 234 and configured to seal to the first tool portion 204 to form a part infusion chamber 228 comprising the part infusion region 212; flexible membranes (246, 248) attached to the second tool portion 206 and configured to apply pressure 230 to resin 214 in the resin wells 210; and a number of seals 232 connected to at least one of the first tool portion 204 or the second tool portion 206 and configured to seal the first tool portion 204 to the second tool portion 206 for an infusion process.
Example 20: The resin infusion tool 202 of Example 19, wherein the second tool portion 206 comprises cavities 238 in the second rigid material 234 configured to overlie the resin wells 210 in an assembled position, and wherein the flexible membranes (246, 248) extend over the cavities 238.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A resin infusion tool (202) comprising:
a first tool portion (204) comprising a first rigid material (208) with a part infusion region (212) and resin wells (210) formed in the first rigid material (208) adjacent the part infusion region (212); and
a second tool portion (206) comprising a second rigid material (234) and configured to seal to the first tool portion (204) to form a part infusion chamber (228) comprising the part infusion region (212).

2. The resin infusion tool (202) of claim 1, wherein the second tool portion (206) comprises cavities (238) configured to overlie the resin wells (210) in an assembled position, and the resin infusion tool (202) further comprising:
flexible membranes (246, 248) covering the cavities (238).

3. The resin infusion tool (202) of claim 1 or 2, further comprising:
channels (216) in the first tool portion (204) between the resin wells (210) and the part infusion chamber (228) and connecting the resin wells (210) to the part infusion chamber (228).

4. The resin infusion tool (202) of claim 3, wherein at least one resin well (210) of the resin wells (210) is connected to multiple channels (216) of the channels (216).

5. The resin infusion tool (202) of any one of claims 1 to 4, further comprising:
a number of seals (232) connected to at least one of the first tool portion (204) or the second tool portion (206) and configured to seal the first tool portion (204) to the second tool portion (206) for an infusion process.

6. The resin infusion tool (202) of any one of claims 1 to 5, wherein the first tool portion (204) comprises a tool base (220) of the resin infusion tool (202).

7. The resin infusion tool (202) of any one of claims 1 to 6, wherein the second tool portion (206) comprises a tool lid (236) of the resin infusion tool (202).

8. The resin infusion tool (202) of any one of claims 1 to 7, wherein each resin well (210) of the resin wells (210) have the same size and shape.

9. The resin infusion tool (202) of any one of claims 1 to 8, further comprising:
at least one localized heater (222) positioned in the first tool portion (204) to heat the resin wells (210).

10. The resin infusion tool (202) of any one of claims 1 to 9, further comprising:
insulation (224) positioned in the first tool portion (204) to thermally isolate the part infusion region (212) from the resin wells (210).

11. A method (1300) of infusing a resin (214) into a composite preform comprising:
placing (1302) the resin (214) into resin wells (210) formed in a first rigid material (208) of a first tool portion (204) of a resin infusion tool (202), the resin wells (210) adjacent a part infusion region (212) of the first tool portion (204);
closing (1304) a second tool portion (206) of the resin infusion tool (202) comprising a second rigid material (234) against the first tool portion (204) to form a part infusion chamber (228) containing a dry preform (218), the part infusion chamber (228) comprising the part infusion region (212);
heating (1306) the resin (214) in the resin wells (210) to degas the resin (214); and
infusing (1308), after degassing, the resin (214) into the dry preform (218) by applying pressure (230) to the resin (214) in the resin wells (210) using the second tool portion (206).

12. The method (1300) of claim 11, wherein (1314) applying pressure (230) to the resin (214) comprises applying pressure (230) to the resin (214) by inflating membranes (246) attached to the second tool portion (206).

13. The method (1300) of claim 12, wherein (1316) applying pressure (230) to the resin (214) by inflating membranes (246) comprises introducing pressure (230) into cavities (238) in the second tool portion (206) configured to overlie the resin wells (210).

14. The method (1300) of claim 12 or 13, wherein (1318) applying pressure (230) to the resin (214) by inflating the membranes (246) comprises inflating the membranes (246) in more than one group successively.

15. The method (1300) of any one of claims 11 to 14, wherein (1320) applying pressure (230) to the resin (214) comprises driving resin (214) into the dry preform (218) using a pressure differential.
